**Europäisches Patentamt**

**European Patent Office**

**Office européen des brevets**

(19)

(11) Veröffentlichungsnummer: **0 176 841**
**B1**

(12) **EUROPÄISCHE PATENTSCHRIFT**

(45) Veröffentlichungstag der Patentschrift: **02.05.90**

(51) Int. Cl.⁵: **G 06 K 11/06,** G 06 K 11/00

(21) Anmeldenummer: **85111638.4**

(22) Anmeldetag: **14.09.85**

(54) **Messaufnehmer mit Markiervorrichtung.**

(30) Priorität: **05.10.84 DE 3436641**

(43) Veröffentlichungstag der Anmeldung:
**09.04.86 Patentblatt 86/15**

(45) Bekanntmachung des Hinweises auf die
Patenterteilung:
**02.05.90 Patentblatt 90/18**

(84) Benannte Vertragsstaaten:
**CH DE FR GB IT LI**

(56) Entgegenhaltungen:
**DE-A-2 939 388**
**GB-A-2 054 300**

(73) Patentinhaber: **Kontron Elektronik GmbH**
**Oskar-von-Miller-Strasse 1**
**D-8057 Eching (DE)**

(72) Erfinder: **Jacob-Grinschgl, Wolfgang**
**Rumfordstrasse 40**
**D-8000 München (DE)**
Erfinder: **Müller, Udo**
**Furtweg 20b**
**D-8044 Unterschleissheim (DE)**

(74) Vertreter: **Dirscherl, Josef et al**
**c/o Bayerische Motoren Werke**
**Aktiengesellschaft, Patentabteilung AJ-3,**
**Postfach 40 02 40, Petuelring 130**
**D-8000 München 40 (DE)**

Courier Press, Leamington Spa, England.

EP 0 176 841 B1

Beschreibung

Die Erfindung betrifft einen Meßaufnehmer für ein Digitalisiertablett, mit einer Meßspule und einem eine Mittelpunktmarkierung aufweisenden Teil.

Ein wichtiges Anwendungsgebiet von Digitalisiereinrichtungen ist das Ausmessen der Koordinaten von Einzelpunkten einer Vorlage in digitaler Form. Dabei kommt es darauf an, keinen Punkt aus Versehen zweimal zu digitalisieren und auch keinen Punkt auszulassen.

Daher muß von der Bedienungsperson jeder gemessene Punkt gekennzeichnet werden, z.B. mit einem Stift. Dadurch wird die Arbeit wesentlich erschwert und verlangsamt, und es kommt zu einer höheren Fehlerzahl.

Der Erfindung liegt die Aufgabe zugrunde, einen Meßaufnehmer zu schaffen, der gleichzeitig eine Kennzeichung eines ausgemessenen Punktes ermöglicht.

Die Lösung dieser Aufgabe ist darin zu sehen, daß das eine Mittelpunktmarkierung aufweisende Teil mit einem mittels eines elektrischen Elements heizbaren Bereich versehen ist zur Kennzeichnung des Mittelpunktes und daß der Meßaufnehmer in Verbindung mit thermosensitivem Papier verwendet wird. Dadurch wird erreicht, daß bei Auslösung des Meßvorganges zugleich ein Stromfluß durch den heizbaren Bereich ausgelöst werden kann, do daß der ausgemessene Punkt zweifelsfrei markiert ist.

Vorzugsweise bildet der heizbare Bereich eine auf ein durchsichtiges Teil aufgebrachte elektrisch leitfähige Schicht. Diese kann fadenkreuzförmig gestaltet sein und kann vorzugsweise im Bereich der Kreuzungsstelle eine verringerte Breite aufweisen, die wiederum gemäß einer Weiterbildung als Widerstandsschicht ausgebildet ist.

Vorzugsweise läßt die Widerstandsschicht einen zentralen kreisförmigen Bereich um die Mittelpunktmarkierung frei. Dadurch wird erreicht, daß der ausgemessene Punkt durch die Thermomarkierung nicht überdeckt wird.

Alternativ kann der heizbare Bereich einen Widerstandsdraht bilden.

Für Meßaufnehmer in Form eines Stiftes ist es günstig, wenn der heizbare Bereich als Nadel ausgebildet ist, die in Richtung der Achse des Meßaufnehmers angeordnet ist.

Die Erfindung ist im folgenden anhand schematischer Zeichnungen an mehreren Ausführungsbeispielen ergänzend beschrieben.

Fig. 1 ist eine perspektivische Ansicht eines Meßaufnehmers;

Fig. 2 ist eine Draufsicht auf den in Fig. 1 strichpunktiert gezeichneten Bereich;

Fig. 3 ist eine andere Ausführungsform des strichpunktiert gezeichneten Bereichs von Fig. 1;

Fig. 4 ist eine Schnittansicht eines Teiles eines Meßaufnehmerstiftes.

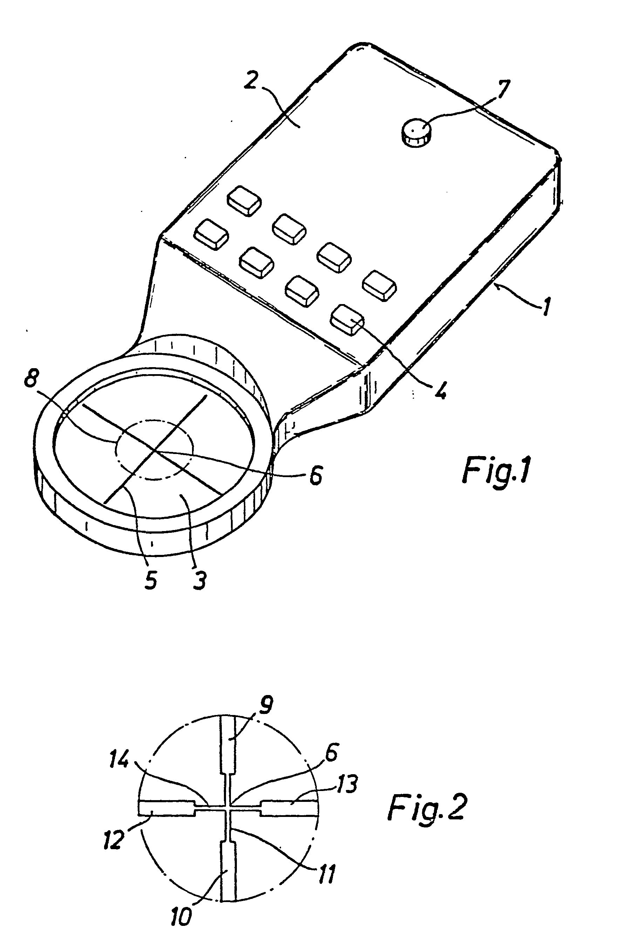

Der in Fig. 1 dargestellte Meßaufnehmer 1, auch unter der Bezeichnung Cursor bekannt, umfaßt ein Gehäuse 2, das einen kreisringförmigen Bereich aufweist, in den eine Glasscheibe 3 eingesetzt ist. Das Gehäuse 2 weist einen Satz Tasten 4 auf, die zum Einleiten gewisser Bedienungsvorgänge für den Betrieb eines Koordinatenmeßtisches dienen.

Die Glasscheibe 3 trägt an ihrer Unterseite ein Fadenkreuz 5 mit einem Mittelpunkt 6, der zugleich den wirksamen elektrischen Mittelpunkt einer in dem ringförmigen Bereich untergebrachten Meßspule darstellt.

Das Gehäuse ist ferner noch mit einem Taster 7 versehen für einen weiter unten noch erläuterten Zweck.

Das Fadenkreuz 5 besteht in den äußeren Bereichen der Arme aus Leitern 9, 10, 12 und 13, die aus einer dünnen Metallschicht bestehen, welche auf die Glasscheibe aufgedampft, aufgesputtert oder anderweitig aufgebracht sind. Die Feinstruktur des zentrumnahen Bereichs des Fadenkreuzes ist in Fig. 2 dargestellt. Man erkennt, daß die Leiter 9 und 10 sowie 12 und 13 jeweils durch einen dünneren Bereich 14 miteinander verbunden sind. Diese dünneren Bereiche bilden Widerstandsbahnen, d.h. sie haben pro Längeneinheit einen Widerstand, der deutlich größer ist als der entsprechende Widerstand der Leiter 9 bis 13. Diese Widerstandsbahnen sollten eine möglichst geringe Breite haben, um eine genaue Markierung zu erreichen.

Die Speisung der Widerstandsbahnen 14 erfolgt beispielsweise in der Weise, daß die Leiter 9 und 13 an den einen Pol und die Leiter 10 und 12 an den anderen Pol einer Stromquelle angeschaltet werden. Diese Anschaltung erfolgt mit dem in Fig. 1 dargestellten Taster 7.

Es ist auch möglich, den Stromfluß durch die Widerstandsbahnen 14 kombiniert mit der Auslösung des Meßvorganges einzuleiten. Dadurch wird erreicht, daß dann und nur dann eine Markierung erfolgt, wenn auch ein Meßvorgang ausgelöst wurde.

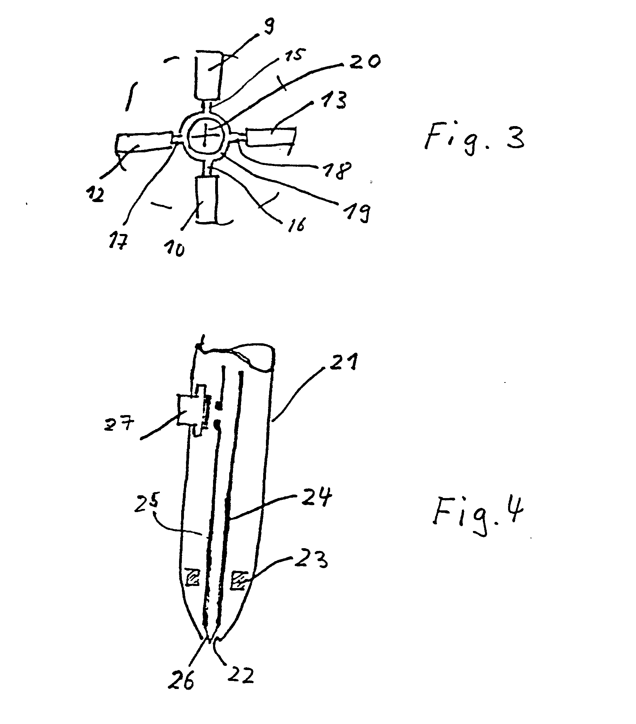

Zur Mittelpunktkennzeichnung kann anstelle eines Fadenkreuzes auch jede beliebige andere geometrische Struktur verwendet werden. Es ist auch möglich, den zentralen Bereich eines Fadenkreuzes anders zu gestalten, wie in Fig. 3 dargestellt ist. Der heizbare Bereich ist bei dieser Ausführungsform als kreisringförmiger Widerstandsbereich 19 ausgebildet, der über seinen Umfang gleichmäßig verteilt vier Übergangsbereiche 15, 16, 17 und 18 aufweist, die mit den Leitern 9, 10, 12 bzw. 13 in Verbindung stehen. In dem durch den kreisförmigen Widerstandsbereich 19 begrenzten Innenbereich ist ein Fadenkreuz 20 auf die Unterseite der Glasscheibe 3 aufgeritzt, die eine genaue Positionierung des Cursors auf einen auszumessenden Punkt ermöglicht. Die Ausführungsform nach Fig. 3 hat den Vorteil, daß der ausgemessene Punkt selbst nicht markiert wird, sondern nur eine Umgebung desselben.

Fig. 4 zeigt eine weitere Ausführungsform, nämlich den unteren Bereich eines als Stift ausgebildeten Meßaufnehmers. Dieser umfaßt ein stiftförmiges Gehäuse 21, etwa entsprechend der Gestalt eines Kugelschreibers, das an seinem unteren Ende verjüngt ausgebildet ist und eine kleine Öffnung 22 aufweist. In der Nähe dieser Öffnung sitzt eine Meßspule 23 zur Aufnahme der von den Gitterleitungen eines Digitalisiertabletts ausgehenden Stromimpulse.

Durch die Öffnung erstreckt sich mit der Spitze nach unten weisend ein V-förmiger und spitzwinklig gebogener Widerstandsdraht 26, dessen Enden mit Stromzuführungen 24 und 25 verbunden sind, die über einen Tastschalter 27 an eine geeignete Stromquelle angeschlossen sind (nicht dargestellt). Beim Betätigen des Tastschalters 27 wird der Widerstandsdraht 26 erhitzt, so daß dessen Spitze auf thermosensitivem Papier einen Markierungspunkt hinterläßt.

Der Taster 27 kann zugleich dazu dienen, einen Meßzyklus auszulösen.

**Patentansprüche**

1. Meßaufnehmer für ein Digitalisiertablett, mit einer Meßspule und einem eine Mittelpunktmarkierung aufweisenden Teil, dadurch gekennzeichnet, daß das Teil mit einem mittels eines elektrischen Elements heizbaren Bereich (11) versehen ist zur Kennzeichnung des Mittelpunktes (6) und daß der Meßaufnehmer in Verbindung mit thermosensitivem Papier verwendet wird.

2. Meßaufnehmer nach Anspruch 1, dadurch gekennzeichnet, daß der heizbare Bereich eine auf ein durchsichtiges Teil aufgebrachte elektrisch leitfähige Schicht (11) bildet.

3. Meßaufnehmer nach Anspruch 2, dadurch gekennzeichnet, daß die leitfähige Schicht fadenkreuzförmig gestaltet ist.

4. Meßaufnehmer nach Anspruch 3, dadurch gekennzeichnet, daß die fadenkreuzförmige Schicht im Bereich der Kreuzungsstelle eine verringerte Breite aufweist.

5. Meßaufnehmer nach Anspruch 4, dadurch gekennzeichnet, daß der Bereich verringerter Breite als Widerstandsschicht ausgebildet ist.

6. Meßaufnehmer nach Anspruch 5, dadurch gekennzeichnet, daß die Widerstandsschicht einen zentralen kreisförmigen Bereich um die Mittelpunktmarkierung freiläßt.

7. Meßaufnehmer nach Anspruch 1 bis 6, dadurch gekennzeichnet, daß der heizbare Bereich einen Widerstandsdraht bildet.

8. Meßaufnehmer nach Anspruch 1 in Form eines Stiftes, dadurch gekennzeichnet, daß der heizbare Bereich als Nadel ausgebildet ist, die in Richtung der Achse des Meßaufnehmers angeordnet ist.

**Revendications**

1. Capteur de mesure pour une tablette de numérisation comportant une bobine de mesure et une partie de marquage du point central, caractérisé en ce que la partie de marquage est munie d'un élément électrique avec une zone (11) susceptible d'être chauffée pour caractériser le centre (6) et le capteur est utilisé en liaison avec du papier thermosensible.

2. Capteur selon la revendication 1, caractérisé en ce que la zone susceptible d'être chauffée forme une couche (11) conductrice électrique appliquée sur une partie transparente.

3. Capteur selon la revendication 2, caractérisé en ce que la couche conductrice est en forme de réticule.

4. Capteur selon la revendication 3, caractérisé en ce que la couche en forme de réticule présente une largeur diminuée au niveau du point d'intersection du réticule.

5. Capteur selon la revendication 4, caractérisé en ce que la zone de largeur réduite est en forme de couche résistante (14).

6. Capteur selon la revendication 5, caractérisé en ce que la couche résistante laisse libre une zone centrale circulaire autour de repérage central.

7. Capteur selon les revendications 1 à 6, caractérisé en ce que la zone susceptible d'être chauffée est constituée par un fil résistant.

8. Capteur selon la revendication 1, en forme de tige, caractérisé en ce que la zone susceptible d'être chauffée est en forme d'aiguille prévue dans la direction de l'axe du capteur.

**Claims**

1. A measuring pick-up for a digitising panel, comprising a measuring unit and a part having a central point marking, characterised in that the part has a region (11) heatable by an electric element for identifying the central point (6), and the measuring pick-up is used in conjunction with thermosensitive paper.

2. A measuring pick-up according to claim 1, characterised in that the heatable region constitutes an electrically-conducting layer (11) deposited on a transparent part.

3. A measuring pick-up according to claim 2, characterised in that the conducting layer is in the form of a cross-wire.

4. A measuring pick-up according to claim 3, characterised in that the cross-wire layer is made narrower near the intersection.

5. A measuring pick-up according to claim 4, characterised in that the narrow region is a resistance layer (14).

6. A measuring pick-up according to claim 5, characterised in that the resistance layer leaves a circular central region free around the central-point marking.

7. A measuring pick-up according to claims 1 to 6, characterised in that the heatable region is a resistance wire.

8. A measuring pick-up according to claim 1 in the form of a stylus, characterised in that the heatable region is a needle disposed along the axis of the measuring pick-up.

Fig.1

Fig.2

1

Fig. 3

Fig. 4